# EUROPEAN PATENT SPECIFICATION

(11) **EP 1 474 985 B1**
(45) Date of publication and mention of the grant of the patent: **02.05.2007**
(21) Application number: 04251520.5
(22) Date of filing: 17.03.2004
(51) Int. Cl.: A21B 7/00, A47J 37/00

(54) **Bread maker**
Brotbackmaschine
Machine de fabrication de pain

(30) Priority: 07.05.2003 KR 2003029091
(43) Date of publication of application: 10.11.2004
(73) Proprietor: SAMSUNG ELECTRONICS CO., LTD., Suwon-si, Gyeonggi-do (KR)
(72) Inventor: Lim, Dong-bin, Paldal-ku, Suwon city, Kyungki-do (KR); Kwon, Yong-hyun, Paldal-ku, Suwon city, Kyungki-do (KR); Kim, Chul, Anyany city, Kyungki-do (KR); Lee, Tae-uk, Suwon city, Kyungki-do (KR); Lee, Jang-woo, Suwon city, Kyungki-do (KR); Sung, Han-jun, Paldal-ku, Suwon city, Kyungki-do (KR)
(74) Representative: Brandon, Paul Laurence

(56) References cited:
- EP-A- 1 357 504
- EP-A- 1 382 258
- EP-A- 1 382 259
- US-A- 5 947 009

## Description

The present invention relates to bread makers, and more particularly, but not exclusively, to bread makers which prevent granules of raw materials for bread from leaking out of a mixing bag in an oven compartment during a kneading process.

Conventionally, various bread makers have been developed to allow a user to easily make bread by automatically performing multiple steps such as kneading, leavening and baking of raw materials to provide finished bread to the user.

Typically, a bread maker in which dough is kneaded by reciprocating a mixing bag up and down comprises an oven compartment; a pair of parallel kneading drums which are disposed in upper and lower parts of the oven compartment and rotated in clockwise and counterclockwise directions; a baking tray having a slit, is placed between the upper and lower kneading drums; a pair of dough-blocking members disposed in an upper part of the oven compartment between the baking tray and the upper kneading drum and prevents raw materials for bread in the mixing bag from being moved toward the upper kneading drum; a heater to heat the inside of the oven compartment; a rotation sensing part to sense rotations of the upper and lower kneading drums; a driver to rotate the upper and lower kneading drums; and a controller to control rotations of the upper and lower kneading drums.

Upper and lower ends of the mixing bag containing raw materials for bread are wound by the pair of kneading drums and then the mixing bag is reciprocated for a predetermined period of time, so that dough is kneaded in the mixing bag.

Thereafter, only the lower kneading drum is rotated, and the kneaded dough in the mixing bag moves into the baking tray. Then, the heater heats the inside of the oven compartment, thereby making bread in the baking tray.

The dough in the mixing bag is kneaded in such a way that the mixing bag which is wound by the kneading drums rotated in clockwise and counterclockwise directions is moved up and down through the slit formed in the baking tray and the dough-blocking members.

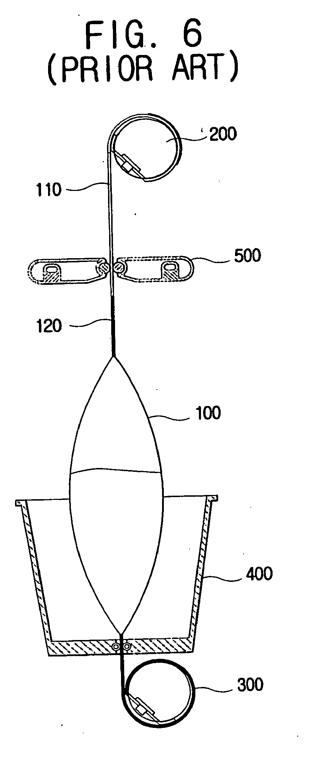

In Figure 6, opening parts 110 of the mixing bag 100 are formed in upper parts of the side edges of the mixing bag 100. Closed parts 120 of the mixing bag 100 are formed in lower parts of side edges of the mixing bag 100. However, during the kneading process, the mixing bag 100 moves up and down. The opening part 110 of the mixing bag 100 wound by the upper kneading drum 200 is moved down below a pair of dough-blocking members 500 when the mixing bag 100 moves down. Then, granules of the dough leak out of the mixing bag 100 through the opening part 110 of the mixing bag 100, when the mixing bag 100 moves back up in the oven compartment, thereby causing malfunction and making it hard to keep the inside of the oven compartment clean.

EP-A-1,382,259 comprises the state of the art for the purpose of assessing novelty only (Article 54(3)) EPC and discloses a bread maker comprising upper and lower kneading drums holding upper and lower parts of a mixing bag; a driver rotating the kneading drums in clockwise and counter-clockwise directions; a baking tray which is placed between the upper and lower kneading drums and formed with a slit; and an oven compartment formed between the baking tray and upper kneading drum; and a controller which controls the driver.

US-A-5 947 009 discloses a bread maker according to the pre-characterising portion of claim 1 and a method of kneading bread in a bread maker according to the pre-characterising portion of claim 8.

Accordingly, it is an aim of preferred embodiments of the present invention to provide a bread maker which is capable of preventing granules of raw materials for bread from leaking out of a mixing bag in an oven compartment during a kneading process.

The present invention provides a bread maker comprising upper and lower kneading drums holding upper and lower parts of a mixing bag whose side edges have an upper opening part and a lower sealed part, respectively; a driver rotating the upper and lower kneading drums in clockwise and counterclockwise directions; a baking tray having a slit, placed between the upper and lower kneading drums; an oven compartment between the baking tray and the upper kneading drum; and a controller which controls the driver, to prevent exposure of the opening part of the mixing bag to the inside of the oven compartment, characterised by further comprising: a rotation sensing part sensing a rotational position of one of the upper and lower kneading drums.

Further features of the present invention are set out in the appended claims.

The invention will become apparent and more readily appreciated from the following description of the preferred embodiments, by way of example only, taken in conjunction with the accompanying drawings of which:
Figure 1 is a perspective view of a bread maker according to an embodiment of the present invention;
Figure 2 is an exploded perspective view of a driver of upper and lower kneading drums according to the present invention;
Figure 3 is a block diagram of a driving sequence of the driver shown in Figure 2;
Figure 4 is a sectional view of upward and downward movement of a mixing bag according to the present invention;
Figure 5 is a sectional view of a downward movement of the mixing bag according to the present invention;
Figure 6 is a sectional view of the downward movement of the mixing bag of a conventional bread maker.

Reference will now be made in detail to the present preferred embodiments of the present invention, examples of which are illustrated in the accompanying drawings, wherein like reference numerals refer to like elements throughout. The embodiments are described below in order to explain the present invention by referring to the figures.

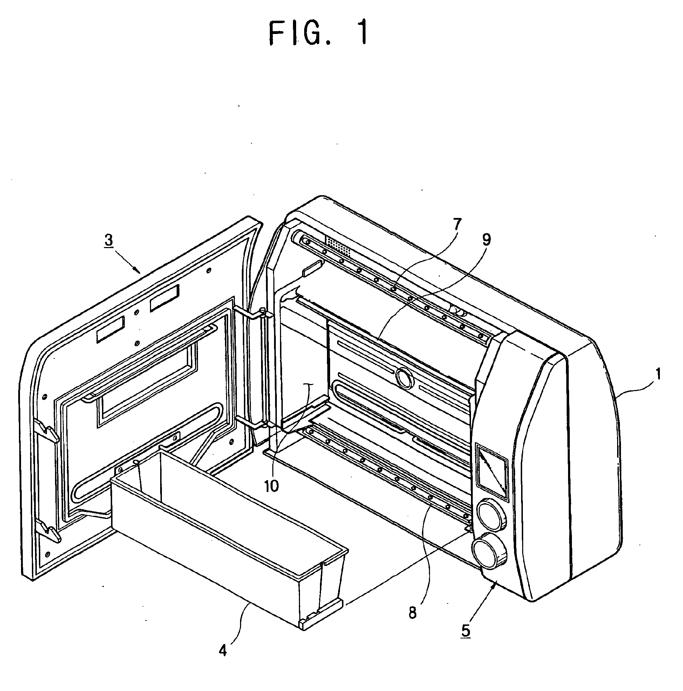

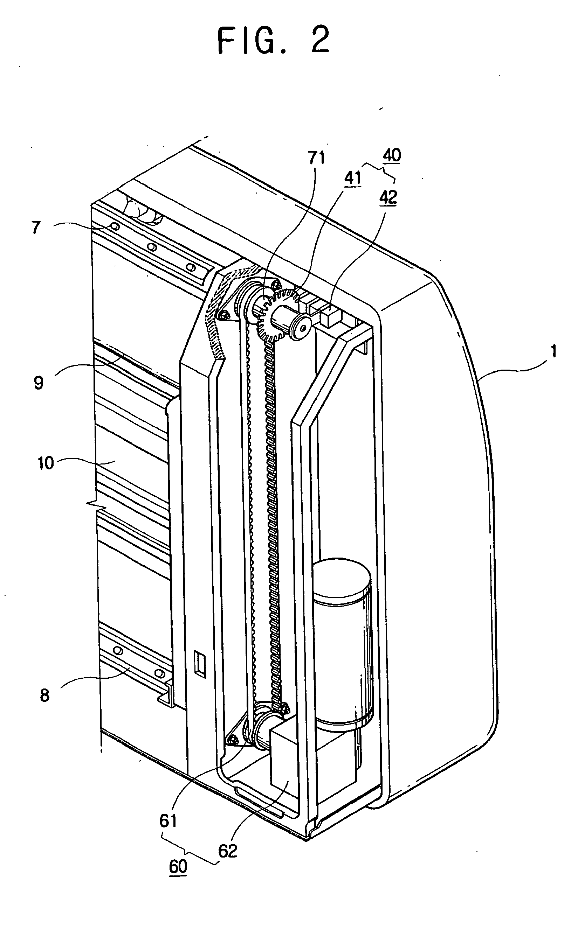

In Figures 1 and 2, a bread maker according to an embodiment of the present invention comprises a main body 1 provided with an oven compartment 10; a door 3 to rotatably open and close a front opening of the oven compartment 10; an operation display panel 5 on a front side of the main body 1 to display an operation state of the main body 1; and a driver 60 disposed in one side of the oven compartment to rotate the upper and lower kneading drums 7 and 8.

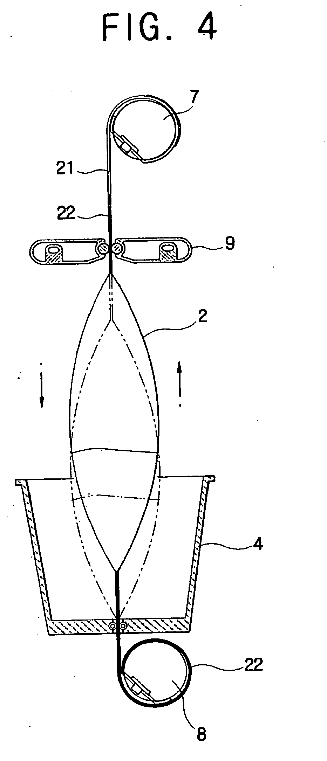

The upper and lower kneading drums 7 and 8 are disposed in parallel in the upper and lower parts inside of the oven compartment 10, to wind upper and lower ends of a mixing bag 2 filled with raw materials for bread in clockwise and counterclockwise directions as shown in Figure 4. A pair of dough-blocking members 9 are placed between the upper and lower kneading drums 7 and 8 to prevent the raw materials kneaded in the mixing bag from moving toward the upper kneading drum 7. In a lower part of the oven compartment 10, a baking tray 4 which may be slid out of the oven compartment 10 and contains the kneaded materials for bread is provided between the upper and lower kneading drums 7 and 8.

The driver 60 comprises a driving motor 62 to rotate the lower kneading drum 8; and a driving belt 61 which connects the upper and lower kneading drums 7 and 8 to each other to rotate the upper and lower kneading drums 7 and 8.

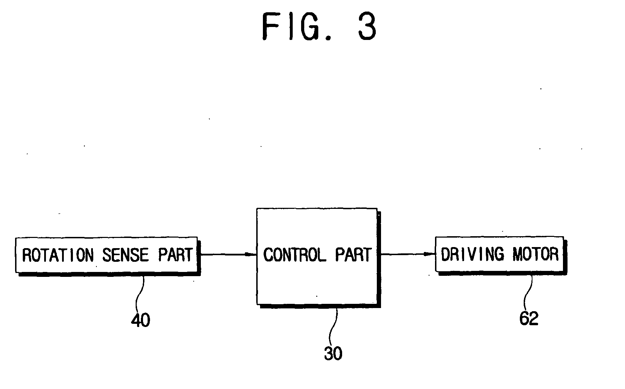

In Figures 2 and 3, the bread maker of this embodiment of the present invention further comprises a rotation sensing part 40 to sense a rotational position of at least one of the upper and lower kneading drums 7 and 8; and a controller 30 to control an operation of the driver 60 based on the rotational position of the upper and lower kneading drums 7 and 8 sensed by the rotation sensing part 40.

For the convenience of description, it is assumed that the rotation sensing part 40 senses the rotational position of the upper kneading drum 7, by way of example. The rotation sense part 40 comprises a rotational signal transmitter 41 connected to a rotation shaft 71 of the upper kneading drum 7; and a rotation sensor 42 positioned adjacent to the rotational signal transmitter 41 in a component compartment 11 to sense a rotational motion of the rotational signal transmitter 41.

In Figures 2 and 3, information on the rotational position of the upper kneading drum 7 detected by the rotation sensor 42 of the rotation sensing part 40 is transmitted to the controller 30. Based on this information, the controller 30 controls the wind of the mixing bag 2 and moves it up and down by controlling the operation of the driving motor 62 of the driver 60 rotating the upper and lower kneading drums 7 and 8 during the winding and kneading processes.

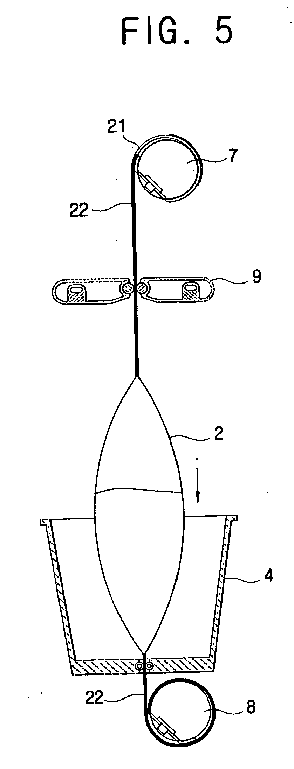

In Figures 4 and 5, the mixing bag 2 wound by the upper and lower kneading drums 7 and 8 moves up and down. When the mixing bag 2 moves down, the controller 30 controls the number of rotations of the upper kneading drum 7 so as to prevent the upper opening part 21 of the mixing bag 2 from being exposed to the inside of the oven compartment 10 by controlling the operation of the driver 60 in response to the transmitted signal of the rotation sensor 42. Thus, the opening parts 21 of opposite side edges of the mixing bag 2 are not exposed to the inside of the oven compartment 10.

Further, if the distance between the upper and lower kneading drums 7 and 8 is relatively narrow as compared with the conventional bread maker, and the controller 30 controls the number of rotations of the upper kneading drum 7 by controlling the operation of the driver 60 when the mixing bag 2 is wound by the upper kneading drum 7, then the exposure of the opening part 21 to the inside of the oven compartment 10 can be prevented when the mixing bag 2 is moved down.

That is, if the distance between the upper and lower kneading drums 7 and 8 is made relatively narrow, as compared with the conventional bread maker, then the controller 30 controls the driver 60, so that the number of rotations of the upper kneading drum 7 increases in accordance with the decrease in the distance between the upper and lower kneading drums 7 and 8. Therefore, the opening part 21 of the mixing bag 2 can be prevented from being exposed to the inside of the oven compartment 10 upon the completion of the downward movement of the mixing bag 2, because the kneading process can still be done with the decrease in the number of rotations of the kneading drums 7 and 8.

When the mixing bag 2 is sufficiently lengthened, the lengthened portion becomes part of a closed part 22 of the mixing bag 2. Thereafter, when the mixing bag 2 is wound by the upper kneading drum 7, the number of rotations of the upper kneading drum 7 increases in accordance with the lengthened portion of the mixing bag 2 by controlling the driver 60. Then, although the upper and lower kneading drums 7 and 8 are rotated with the same number of rotations as in the conventional bread maker, the opening part 21 of the mixing bag 2 is prevented from being exposed to the inside of the oven compartment 10 upon the completion of the downward movement of the mixing bag 2, thus preventing granules of the raw materials from leaking out of the mixing bag and malfunctioning of the bread maker.

As described above, according to preferred embodiments of the present invention, the controller controls the driver, so that the opening part of the mixing bag is wound by the upper kneading drum, thus, preventing granules of the raw materials contained in the mixing bag from leaking out and malfunctioning of the bread maker can be prevented and the inside of the oven compartment can be kept clean.

## Claims

1. A bread maker comprising:
upper and lower kneading drums (7, 8) holding upper and lower parts of a mixing bag (2) whose side edges have upper opening parts (21) and lower sealed parts, respectively;
a driver (60) rotating the kneading drums (7, 8) in clockwise and counterclockwise directions;
a baking tray (4) which is placed between the upper and lower kneading drums (7, 8) and formed with a slit;
and an oven compartment (10) formed between the baking tray (4) and the upper kneading drum (7); and
a controller (30) which controls the driver (60), so that exposure of the opening parts (21) of the mixing bag (2) to the inside of the oven compartment is prevented,
**characterised by**
further comprising: a rotation sensing part (40) sensing a rotational position of one of the upper and lower kneading drums (7, 8).

2. The bread maker of claim 1, wherein the distance between the upper and lower kneading drums (7 ,8) is such that the exposure of the opening part (21) of the mixing bag (2) to the inside of the oven compartment (10) can be prevented.

3. The bread maker of any preceding claim, wherein the controller (30) controls a rotation of the upper kneading drum when the mixing bag (2) is wound by the upper kneading drum (7), so that the exposure of the opening part (21) of the mixing bag (2) to the inside of the oven compartment (10) can be prevented during a kneading process.

4. The bread maker of any preceding claim, wherein the controller (30) controls an operation of the driver (60) based on a rotation signal of the upper kneading drum (7) sensed by a rotation sensor (42).

5. The bread maker of any preceding claim, further comprising:
a pair of dough-blocking members disposed in an upper part of the oven compartment (10) between the baking tray (4) and the upper kneading drum (7).

6. The bread maker of claim 1, wherein the rotation sensing part (40) comprises:
a rotation signal transmitter (41) connected to a rotation shaft (71) of the upper kneading drum (7); and
a rotation sensor (42) to sense a rotation of the rotational signal transmitter (41).

7. The bread maker of claim 3, wherein the controller (30) controls an operation of the driver (60) based on a rotation signal of the upper kneading drum (71) sensed by the rotation sensing part (40).

8. A method of kneading bread in a bread maker, comprising:
rotating an upper kneading drum (7) and a lower kneading drum (8) in a first direction and a direction opposite the first direction, the upper and lower kneading drums (7,8) holding upper and lower parts of a mixing bag (2) whose side edges have upper opening parts (21) and lower sealed parts, respectively;
so that exposure of the opening parts (21) of the mixing bag (2) to the inside of the oven compartment (10) is prevented;
**characterised by** detecting a rotational position of one of the upper kneading drum (7) and the lower kneading drum (8);
transmitting information on a rotation signal detected by a rotation sensor (42) to a controller (30); and
controlling a driver (60) based on the rotation signal sensed by the rotation sensor (42).

## Patentansprüche

1. Brotherstellungsgerät, umfassend:
obere und untere Knettrommeln (7, 8) zum Halten oberer und unterer Teile eines Mischbeutels (2), dessen Seitenkanten obere sich öffnende Teile (21) beziehungsweise untere versiegelte Teile aufweisen;
einen Antrieb (60) zum Drehen der Knettrommeln (7, 8) in Richtung des Uhrzeigers und gegen die Richtung des Uhrzeigers;
eine Backform (4), die zwischen den oberen und unteren Knettrommeln (7, 6) angeordnet und mit einem Schlitz ausgebildet ist;
und einen Ofenhohlraum (10), der zwischen der Backform (4) und der oberen Knettrommel (7) ausgebildet ist; und
eine Steuerung (30), die den Antrieb (60) derart steuert, dass ein Freiliegen der sich öffnenden Teile (21) des Mischbeutels (2) zur Innenseite des Ofenhohlraumes hin verhindert wird,
**dadurch gekennzeichnet, dass** es des Weiteren umfasst:
einen Dreherfassungsteil (40) zum Erfassen einer Drehposition der oberen oder unteren Knettrommeln (7, 8).

2. Brotherstellungsgerät nach Anspruch 1, bei dem der Abstand zwischen den oberen und unteren Knettrommeln (7, 8) derart ist, dass das Freiliegen des sich öffnenden Teiles (21) des Mischbeutels (2) zur Innenseite des Ofenhohlraumes (10) hin verhindert werden kann.

3. Brotherstellungsgerät nach einem der vorhergehenden Ansprüche, bei dem, wenn der Mischbeutel (2) von der oberen Knettrommel (7) gewickelt wird, die Steuerung (30) eine Drehung der oberen Knettrommel derart steuert, dass das Freiliegen des sich öffnenden Teiles (21) des Mischbeutels (2) zur Innenseite des Ofenhohlraumes (10) hin während eines Knetvorganges verhindert werden kann.

4. Brotherstellungsgerät nach einem der vorhergehenden Ansprüche, bei dem die Steuerung (30) den Betrieb des Antriebes (60) auf Grundlage eines von einem Drehsensor (42) erfassten Drehsignals der oberen Knettrommel (7) steuert.

5. Brotherstellungsgerät nach einem der vorhergehenden Ansprüche, des Weiteren umfassend:
ein Paar von Teigsperrelementen, die in einem oberen Teil des Ofenhohlraumes (10) zwischen der Backform (4) und der oberen Knettrommel (7) angeordnet sind.

6. Brotherstellungsgerät nach Anspruch 1, bei dem der Dreherfassungsteil (40) umfasst:
einen Drehsignalüberträger (41), der mit einer Drehwelle (71) der oberen Knettrommel (7) verbunden ist; und
einen Drehsensor (42) zum Erfassen einer Drehung des Drehsignalüberträgers (41).

7. Brotherstellungsgerät nach Anspruch 3, bei dem die Steuerung (30) den Betrieb des Antriebes (60) auf Grundlage eines von dem Dreherfassungsteil (40) erfassten Drehsignals der oberen Knettrommel (71) steuert.

8. Verfahren des Knetens von Brot in einem Brotherstellungsgerät, umfassend:
ein Drehen einer oberen Knettrommel (7) und einer unteren Knettrommel (8) in einer ersten Richtung und in einer zu der ersten Richtung entgegengesetzten Richtung, wobei die oberen und unteren Knettrommeln (7, 8) obere und untere Teile eines Mischbeutels (2) halten, dessen Seitenkanten obere sich öffnende Teile (21) beziehungsweise untere versiegelte Teile aufweisen:
derart, dass ein Freiliegen der sich öffnenden Teile (21) des Mischbeutels (2) zur Innenseite des Ofenhohlraumes (10) hin verhindert wird:
**gekennzeichnet durch**
ein Erfassen einer Drehposition der oberen Knettrommel (7) oder der unteren Knettrommel (8);
ein Übertragen von Information über ein von einem Drehsensor (42) erfasstes Drehsignal an eine Steuerung (30); und
ein Steuern eines Antriebes (60) auf Grundlage des von dem Drehsensor (42) erfassten Drehsignals.

## Revendications

1. Machine à pain comprenant :
des tambours pétrisseurs supérieur et inférieur (7, 8) supportant des parties supérieure et inférieure d'un sac mélangeur (2) dont les bords latéraux possèdent des parties supérieures ouvrantes (21) et des parties inférieures scellées, respectivement ;
un entraînement (60) faisant tourner les tambours pétrisseurs (7, 8) dans le sens horaire et le sens antihoraire ;
un plateau de cuisson (4) qui est placé entre les tambours pétrisseurs supérieur et inférieur (7, 8) et qui est doté d'une fente ; et
un organe de commande (30) qui commande l'entraînement (60), de façon à empêcher l'exposition des parties ouvrantes (21) du sac mélangeur (2) vers l'intérieur du compartiment de four,
**caractérisée en ce qu'**elle comprend en outre :
une partie de mesure de rotation (40) mesurant une position en rotation de l'un des tambours pétrisseurs supérieur et inférieur (7, 8).

2. Machine à pain selon la revendication 1, dans laquelle la distance entre les tambours pétrisseurs supérieur et inférieur (7, 8) est telle que l'on peut empêcher l'exposition de la partie ouvrante (21) du sac mélangeur (2) vers l'intérieur du compartiment de four (10).

3. Machine à pain selon l'une quelconque des revendications précédentes, dans laquelle l'organe de commande (30) commande une rotation du tambour pétrisseur supérieur lorsque le sac mélangeur (2) est enroulé par le tambour pétrisseur supérieur (7), de sorte que l'on peut empêcher l'exposition de la partie ouvrante (21) du sac mélangeur (2) vers l'intérieur du compartiment de four (10) pendant un processus de pétrissage.

4. Machine à pain selon l'une quelconque des revendications précédentes, dans laquelle l'organe de commande (30) commande le fonctionnement de l'entraînement (60) en se fondant sur un signal de rotation du tambour pétrisseur supérieur (17) mesuré par un capteur de rotation (42).

5. Machine à pain selon l'une quelconque des revendications précédentes, comprenant en outre :
une paire d'éléments de blocage de pâte placés dans une partie supérieure du compartiment de four (10) entre le plateau de cuisson (4) et le tambour pétrisseur supérieur (7).

6. Machine à pain selon la revendication 1, dans laquelle la partie de mesure de rotation (40) comprend :
un transmetteur de signal de rotation (41) raccordé à un arbre rotatif (71) du tambour pétrisseur supérieur (7) ; et
un capteur de rotation (42) mesurant la rotation du transmetteur de signal de rotation (41).

7. Machine à pain selon la revendication 3, dans laquelle l'organe de commande (30) commande le fonctionnement de l'entraînement (60) en se fondant sur un signal de rotation du tambour pétrisseur supérieur (71) mesuré par la partie de mesure de rotation (40).

8. Procédé de pétrissage de pain dans une machine à pain, comprenant les étapes consistant à :
faire tourner un tambour pétrisseur supérieur (7) et un tambour pétrisseur inférieur (8) dans une première direction et dans une direction opposée la première direction, les tambours pétrisseurs supérieur et inférieur (7, 8) supportant des parties supérieure et inférieure d'un sac mélangeur (2) dont les côtés latéraux possèdent des parties supérieures ouvrantes (21) et des parties inférieures scellées, respectivement ;
de façon à empêcher l'exposition des parties ouvrantes (21) du sac mélangeur (2) vers l'intérieur du compartiment de four (10) ;
**caractérisée par** les étapes consistant à :
détecter une position de rotation de l'un parmi le tambour pétrisseur supérieur (7) et le tambour pétrisseur inférieur (8) ;
transmettre une information relative à un signal de rotation détecté par un capteur de rotation (42) à un organe de commande (30) ; et
commander un entraînement (60) en se fondant sur le signal de rotation mesuré par le capteur de rotation (42).
